# EUROPÄISCHE PATENTSCHRIFT

(11) **EP 3 882 316 B1**
(45) Veröffentlichungstag und Bekanntmachung des Hinweises auf die Patenterteilung: **02.11.2022**
(21) Anmeldenummer: 21158780.3
(22) Anmeldetag: 23.02.2021
(51) Int. Cl.: C09D 5/00, B32B 1/08

(54) **UMLAGESCHLAUCH MIT EINEM FKM-COATING**
HOSE WITH FKM COATING
TUYAU DE PRÉLÈVEMENT À REVÊTEMENT FKM

(30) Priorität: 20.03.2020 DE 102020203632
(43) Veröffentlichungstag der Anmeldung: 22.09.2021
(73) Patentinhaber: ContiTech Techno-Chemie GmbH, 61184 Karben (DE)
(72) Erfinder: Sinemus, Martin, 30419 Hannover (DE); Jungrichter, Frank, 30419 Hannover (DE); Brühne, Klaus, 30419 Hannover (DE); Stefan, Thomas, 30419 Hannover (DE)
(74) Vertreter: Continental Corporation

(56) Entgegenhaltungen:
- EP-A1- 1 167 442
- EP-A1- 1 170 120
- EP-A1- 1 260 747
- WO-A1-2017/092894

## Beschreibung

Die Erfindung betrifft ein Verfahren zur Herstellung eines mit FKM beschichteten Umlageschlauchs und den nach dem Verfahren hergestellten Umlageschlauch.

Schläuche bestehen in den einfachsten Fällen aus einem 2- oder 3-schichtigen Aufbau. Der Schlauch mit einem 2-schichtigen Aufbau hat den Aufbau Innenschicht / Festigkeitsträger und wird als Umlageschlauch bezeichnet. Der Schlauch mit einem 3-schichtigen Aufbau hat den Aufbau Innenschicht / Festigkeitsträger /Außenschicht und wird als Einlageschlauch bezeichnet.

Beim Einlageschlauch schützt die Außenschicht die darunter liegenden Schichten gegenüber äußeren Einflüssen. Dies können chemische, mechanische, thermische und witterungsbedingte Einflüsse sowie Verschmutzungen sein.

Umlageschläuche können eingesetzt werden, wenn die erwähnten äußeren Einflüsse so gering sind, dass Funktionsbeeinträchtigungen und Beschädigungen aufgrund der fehlenden Außenschicht auszuschließen sind, oder der Festigkeitsträger genügend beständig gegenüber diesen Einflüssen ist.

Bei Umlageschläuchen kann aber zum Schutz eine Beschichtung auf den Festigkeitsträger aufgebracht werden, die oft auch als Coating bezeichnet wird. Ein Coating schützt die darunter liegenden Schichten gegen chemische, thermische und witterungsbedingte Einflüsse. Der Schutz gegen mechanische Belastung, wie z. B. Scheuern, ist jedoch aufgrund der dünneren Schichtdicke des Coatings geringer als bei einem herkömmlichen Einlageschlauch.

Des Weiteren werden bei einem beschichteten Festigkeitsträger mögliche anschließende Bearbeitungsschritte, wie z. B. die Stempelung und insbesondere das Schneiden, erleichtert, da die Oberfläche des Festigkeitsträgers durch die Beschichtung versiegelt ist. Ebenso wird das Ausfransen des Festigkeitsträgers nach dem Schneiden verhindert und es entsteht eine saubere Schnittkante.

In der Regel werden Umlageschläuche mit handelsüblichen Acrylatdispersionen beschichtet, die ein sehr breites Eigenschaftsspektrum abdecken. Derartige Umlageschläuche sind z.B. aus WO 2017/092894 A1 bekannt.

Umlageschläuche werden häufig im Abgasstrang eingesetzt und sind Dauertemperaturen von 230°C ausgesetzt. Acrylatbeschichtungen sind für diese Temperaturbereiche nicht geeignet, da Acrylate in diesen Temperaturbereichen thermisch zersetzt werden. Denkbar sind dann 3 Ausführungsvarianten:
kein Coating,
ein Coating bestehend aus einer Silicon-Lösung,
ein Coating bestehend aus einer FKM-Lösung.

Die Variante ohne Aufbringung einer Beschichtung erfordert ein Rohmaterial für den Festigkeitsträger, das je nach Anwendungsfall aufwendig hergestellt werden muss, z. B. hinsichtlich der Farbe. Das hat hohe Materialkosten zur Folge. Weitere Nachteile bei Umlageschläuchen ohne Beschichtung sind eine sehr leichte Verschmutzung des Festigkeitsträgers und unsaubere Schnittkanten beim Zuschneiden, was einen hohen Abfallsatz bedingt.

Silicon- und FKM-Lösungen enthalten organische Lösemittel und sollten hinsichtlich der immer strenger werdenden Emissionsvorschriften zukünftig nicht mehr eingesetzt werden. Zudem ist FKM-Kautschuk nur schwer löslich, was die Lösungsherstellung sehr energieintensiv macht und gesundheitlich bedenkliche Lösemittel erfordert.

Die EP 1 260 747 A1 beschreibt Kraftstoffschläuche mit einer inneren fluoroplastischen Schicht und einer äußeren Schicht aus aliphtatischem Polyamid. Die EP 1 170 120 A1 und die EP 1 167 442 A1 beschreiben wässrige Fluorpolymer-Beschichtungsmassen, die mit Hilfe von Polyaminen oder Polyolen vernetzt werden können.

Die Aufgabe der Erfindung besteht darin, einen Umlageschlauch bereitzustellen, der für Anwendungen bei hoher Dauertemperaturbelastung die oben genannten Nachteile nicht aufweist oder zumindest in deutlich reduzierter Form. Insbesondere bestand die Aufgabe in der Bereitstellung eines geeigneten Beschichtungsverfahrens für Umlageschläuche, welches frei von VOC-Emissionen ist (VOC = flüchtige organische Verbindungen) und möglichst keinen zusätzlichen Prozessschritt, wie z. B. eine Vorimprägnierung des Festigkeitsträgers erfordert, wobei der erhaltene beschichtete Umlageschlauch hochtemperaturbeständig und chemikalienbeständig, z. B. bei kurzzeitigem Kontakt gegenüber im Motorraum auftretenden Medien, Spritzwasser usw., ist sowie einen stabilen Lagenverbund des Schlauchs ergibt.

Gelöst wird diese Aufgabe durch ein Verfahren zur Herstellung eines mit FKM beschichteten Umlageschlauchs, bei dem
a) ein Festigkeitsträger über einer Innenschicht 1 angeordnet wird, um eine Umlageschicht 2 zu bilden,
b) eine Beschichtungszusammensetzung, die Fluorkautschuk (FKM) enthält, auf den Festigkeitsträger aufgebracht und getrocknet wird, bevor oder nachdem der Festigkeitsträger über der Innenschicht angeordnet wird, und
c) die getrocknete Beschichtungszusammensetzung auf dem Festigkeitsträger, der über der Innenschicht angeordnet ist, vulkanisiert wird, um die FKM-Beschichtung 3 zu bilden,
dadurch gekennzeichnet, dass die FKM enthaltende Beschichtungszusammensetzung eine wässrige FKM-Dispersion ist, die mindestens ein Vernetzungsmittel ausgewählt aus Polyamin, monomerem Aminosilan und oligomerem Aminosilan enthält. Die beschriebene Beschichtungszusammensetzung entspricht dabei im weitesten Sinne der einer handelsüblichen wässrigen Dispersionsfarbe: der FKM-Latex ist dabei das Bindemittel und das Amin/Aminosilan der Härter. Mit einer solchen Dispersion können deutlich geringere Schichtdicken realisiert als mit einem Auftrag durch Extrusion, was eine deutliche Kosteneinsparung bedeutet.

Durch den Einsatz einer wässrigen FKM-Dispersion kann die Fertigung VOC-frei durchgeführt werden. Es ist möglich, eine dünne FKM-Schicht aufzubringen. Bei Einsatz von monomeren und/oder oligomeren Aminosilanen ergibt sich der zusätzliche Vorteil einer verbesserten Lagenhaftung gegenüber einem gewöhnlichen Polyamin, insbesondere wenn das eingesetzte Aminosilan auf die FKM-Dispersion und den Festigkeitsträger abgestimmt werden. Eine Vorbehandlung des Festigkeitsträgers ist nicht unbedingt erforderlich. Der erfindungsgemäße Umlageschlauch zeigt auch die gewünschte Beständigkeit gegen hohe Temperaturen und Chemikalien.

Bevorzugte Ausführungsformen des Verfahrens sind in den abhängigen Ansprüchen angegeben. Im Folgenden wird die Erfindung ausführlich erläutert.

FKM ist die übliche Abkürzung für Fluorkautschuk. Fluorkautschuk schließt verschiedene fluorhaltige Kautschukpolymere ein. Es kann sich um Polymer- oder Co- bzw. Terpolymerprodukte verschiedener fluorhaltiger Monomere, wie z.B. Vinylidenfluorid, Hexafluorpropylen, Tetrafluorethylen, handeln. Es können alle handelsüblichen Fluorkautschuke eingesetzt werden, z.B. FKM-Copolymere, FKM-Terpolymere, FKM-Tetrapolymere oder Gemische dieser Typen. Ebenso sind FKM-Typen geeignet, die peroxidisch vernetzbar sind und über reaktive Gruppen wie z. B. Trifluor-Brom-Ethylen verfügen.

Als Beschichtungszusammensetzung wird erfindungsgemäß eine wässrige FKM-Dispersion eingesetzt, d.h. eine Polymerdispersion von FKM in wässrigem Medium. Dabei ist fester FKM, insbesondere in Teilchenform, in dem wässrigen Medium dispergiert. Die wässrige FKM-Dispersion ist bevorzugt ein wässriger FKM-Latex. Dabei handelt es sich um eine kolloidal stabile Dispersion von FKM-Partikeln in der wässrigen Phase. Die Dispersion bzw. der Latex ist durch Hilfsmittel wie Tenside oder Schutzkolloide stabilisiert. Wässrige FKM-Dispersionen sind im Handel erhältlich, diese Produkte sind dem Fachmann allgemein bekannt.

Die Vernetzung bzw. Vulkanisation des FKM erfolgt diaminisch. In der wässrigen FKM-Dispersion ist hierfür mindestens ein Vernetzungsmittel enthalten, das aus Polyamin, monomerem Aminosilan und oligomerem Aminosilan ausgewählt ist.

Polyamine sind organische Verbindungen, die mindestens zwei Aminogruppen aufweisen. Bei den Aminogruppen kann es sich um primäre, sekundäre, tertiäre oder blockierte Aminogruppen, vorzugsweise um primäre Aminogruppen oder um blockierte primäre Aminogruppen, handeln. Das Polyamin ist wasserlöslich. Die Polyamine können in nicht blockierter oder blockierter Form eingesetzt werden. Eine Blockierung des Polyamins, kann vorteilhaft sein, um die Lagerzeit zu erhöhen. Beispiele für geeignete Polyamine sind Hexamethylendiamincarbamat (HMDC), Triethylentetramin (TETA), Dietythylentriamin (DETA) und Tetraethylenpentamin (TEPA) oder Hexamethylendiamin (HMDA).

Die erfindungsgemäß eingesetzte wässrige FKM-Dispersion enthält bevorzugt monomeres Aminosilan und/oder oligomeres Aminosilan als Vernetzer. Das monomere Aminosilan kann eine, zwei, drei oder mehr Aminogruppen aufweisen, wobei zwei oder drei Aminogruppen bevorzugt sind. Wird ein Aminosilan mit einer Aminogruppe eingesetzt, sollte noch mindestens ein weiteres Polyamin eingesetzt werden, um einen ausreichenden Vernetzungsgrad zu erzielen. Das oligomere Aminosilan kann aus monomerem Aminosilan mit einer, zwei, drei oder mehr Aminogruppen, bevorzugt einer, zwei oder drei Aminogruppen, gebildet werden.

Sofern nicht ausdrücklich anders angegeben, bezieht sich der Ausdruck Aminosilan auf ein monomeres Aminosilan, bevorzugt ein Aminosilan der folgenden allgemeinen Formel (I)

RₙSiX₍₄₋ₙ₎ (I)

worin R eine organische Gruppe ist, die mindestens eine Aminogruppe aufweist, und vorzugsweise über mindestens ein Kohlenstoffatom an das Si gebunden ist, X in der Regel eine hydrolysierbare Gruppe ist und n 1, 2 oder 3, bevorzugt 1 oder 2 und insbesondere 1 ist. Die Gruppe R weist bevorzugt eine, zwei oder drei Aminogruppen auf. Bei den Aminogruppen handelt es sich bevorzugt um primäre oder sekundäre Aminogruppen. Die Gruppe R ist bevorzugt ein Alkylrest, der eine oder mehrere Aminogruppen endständig, seitenständig und/oder innerhalb der Alkylkette aufweist. Als Gruppe für den Rest X kommen bevorzugt Alkoxygruppen, wie Methoxy, Ethoxy oder Isopropoxy, in Betracht.

Beispiele für zweckmäßige Aminosilane sind 2-Aminoethyl-3-aminopropyltrimethoxysilan oder 2-Aminoethyl-3-aminopropyldimethoxysilan.

Sofern die Gruppen X in den Aminosilanen Hydroxygruppen sind, handelt es sich um Silanolgruppen (Si-OH). Aminosilane, die als Gruppen X hydrolysierbare Gruppen, wie z.B. Alkoxygruppen, aufweisen, hydrolysieren bei Anwesenheit von Wasser unter Bildung von Silanolgruppen. Hydrolysierte Silane enthalten daher Silanolgruppen, die chemisch instabil sind leicht miteinander kondensieren, wodurch Oligomere bzw. Kondensate der Aminosilane gebildet werden.

Es ist bevorzugt, dass die wässrige FKM-Dispersion oligomeres Aminosilan als Vernetzungsmittel enthält. Vollständig hydrolysierte oligomere Aminosilane sind als Vernetzungsmittel besonders geeignet, da nicht hydrolysierte Aminosilane in Abhängigkeit vom pH-Wert sehr schnell und unkontrolliert hydrolysieren und die Verwendung häufig zu einer Gelierung und damit zu einer Instabilität des FKM-Latex führt.

Durch Kondensationsreaktionen der Silanolgruppen der oligomeren Aminosilanen kann die Vernetzungsdichte weiter erhöht werden.

Zudem werden keine organischen Spaltprodukte freigesetzt, ein VOC-freies Arbeiten ist somit möglich.

Ein zusätzlicher Vorteil, der durch Einsatz monomerer und/oder oligomerer Aminosilane erzielt wird, ist eine verbesserte Haftung der FKM-Beschichtung an dem Festigkeitsträger und gegebenenfalls auch an der Innenschicht. Monomere und oligomere Aminosilane wirken dabei als Haftvermittler.

In der Regel umfasst die wässrige FKM-Dispersion mindestens einen Säureakzeptor. Der Säureakzeptor ist bevorzugt ein Metalloxid, wie z.B. MgO oder ZnO, wobei das Metalloxid bevorzugt als wässrige Metalloxid-Dispersion zugegeben wird. Besonders bevorzugt sind wässrige Dispersionen von ZnO-Partikeln, insbesondere wässrige Dispersionen von ZnO-Nanopartikeln, da diese den FKM-Latex nicht destabilisieren.

Die wässrige FKM-Dispersion kann ferner ein oder mehrere Additive enthalten, die auf dem Gebiet üblich und dem Fachmann bekannt sind. Beispiele für Additive sind Tenside, Schutzkolloide und Pigmente wie Ruß. Tenside oder Schutzkolloide können zur Stabilisierung der Dispersion bzw. des Latex dienen. Zur Stabilisierung gegen mechanische und chemische Einflüsse können z. B. nichtionische, aromatische Polyglycolether oder anionische Tenside, wie Laurylsulfat, als Additive eingesetzt werden. Pigmente, wie z. B. Ruß, sollten nur in Form einer wässrigen, Dispersion zugegeben werden, damit der Latex nicht destabilisiert wird.

Das Dispersionsmittel der wässrigen FKM-Dispersion ist allgemein Wasser, vorzugsweise destilliertes Wasser.

Der Gehalt an Wasser in der wässrigen FKM-Dispersion kann z.B. im Bereich von 30 bis 98 Gew.-%, bevorzugt 60 bis 95 Gew.-%, bevorzugter 75 bis 94 Gew.-%, liegen. Der Anteil an FKM in der wässrigen FKM-Dispersion kann z.B. im Bereich von 1 bis 67 Gew.-%, bevorzugt 1 bis 50 Gew.-%, bevorzugter 2 bis 20 Gew.-%, bevorzugter 10 bis 20 Gew.-%, FKM, bezogen auf das Gesamtgewicht der FKM-Dispersion, liegen.

Die Gesamtmenge an Polyamin, monomerem und/oder oligomerem Aminosilan in der wässrigen FKM-Dispersion liegt z.B. im Bereich von 1 bis 20 phr, bevorzugt 2,5 bis 10 phr.

In einer bevorzugten Ausführungsform kann die Gesamtmenge an Polyamin und/oder oligomerem, hydrolysiertem Aminosilan in der wässrigen FKM-Dispersion z.B. im Bereich von 1 bis 10 phr liegen.

Die Innenschicht des Umlageschlauchs wird auch als Innengummi bezeichnet und stellt einen flexiblen Schlauch dar. Die Innenschicht ist mit einer äußeren Lage aus Festigkeitsträger, der so genannten Umlage bzw. Umlageschicht, versehen. Die Innenschicht kann aus Elastomeren, thermoplastischen Elastomeren oder Thermoplasten gebildet werden. Bevorzugt sind Elastomere, thermoplastische Elastomere oder Thermoplaste, die eine Temperaturbeständigkeit von größer oder gleich 230°C aufweisen.

Die Innenschicht umfasst bevorzugt ein oder mehrere Elastomere oder besteht daraus. Die Elastomere sind beispielsweise ausgewählt aus der Gruppe, bestehend aus:
(teil)hydriertem Nitrilkautschuk (HNBR) und/oder Nitrilkautschuk (NBR) und / oder Fluorkautschuk (FKM) und / oder Polyepichlorhydrin (ECO) und / oder EthylenVinylacetat-Kautschuk (EVA) und / oder Acrylat-Kautschuk (ACM) und / oder Ethylen-Acrylat- Kautschuk (AEM) und / oder Silikonkautschuk (MQ, VMQ, PVMQ, FVMQ) und / oder Fluoriertem Methylsilikonkautschuk (MFQ) und / oder Perfluoriertem Propylen-Kautschuk (FFPM) und / oder Perfluorcarbon-Kautschuk (FFKM) und / oder Ethylen-Propylen-Dien- Kautschuk (EPDM).

Besonders gute Ergebnisse hinsichtlich der thermischen Stabilität lassen sich erzielen, wenn HNBR, FKM, FPM, ACM, AEM und / oder Silikonkautschuk verwendet wird, wobei FKM, FPM, VMQ, FVMQ besonders gut geeignet sind. Besonders bevorzugt ist die Innenschicht aus FKM bei T> 230°C gebildet.

Grundsätzlich sind sämtliche Materialien für den Festigkeitsträger einsetzbar, die für Schläuche relevant sind. Beispiele sind Naturfasern, z.B. Baumwolle; natürliche Polymere, z.B. Reyon oder Modal; synthetische Polymere, z.B. Polyamide, Polyester, PVA oder Aramide; anorganische Polymere, z.B. Glasfasern, Metallfasern, Carbonfasern und mineralische Fasern.

Als Festigkeitsträger für die Umlage werden bevorzugt Fasern aus Polyphenylensulfid (PPS) und / oder Polyoxadiazol (POD) und / oder Aramid (AR) und / oder Polyimid (PI) und / oder Polyetheretherketon (PEEK) und / oder Polyethylen-2,6-naphthalat (PEN) und / oder Polyphenylen (PPP) und / oder Polyphenylenoxid (PPO) und / oder Polyphenylenether (PPE) und / oder anorganische Fasern eingesetzt, wobei Fasern aus meta-Aramid (m-Ar), PPS oder anorganische Fasern, wie z. B. Glas oder Basalt, besonders bevorzugt sind. Am meisten bevorzugt sind m-Ar-Fasem. Die vorstehend genannten Fasern eignen sich insbesondere für Hochtemperaturanwendungen, wie z.B. Dauertemperaturen über 230°C (T_{Dauer}=230°C).

In einer besonders bevorzugten Ausführungsform umfasst der Umlageschlauch eine FKM-Innenschicht, die diaminisch, bisphenolisch oder peroxidisch vernetzt sein kann, einen Festigkeitsträger bzw. eine Umlageschicht aus m-Ar oder PPS, bevorzugt als Filament- oder Stapelfaser, bevorzugter als Stapelfaser, und eine auf wässrigem FKM-Latex basierende FKM-Beschichtung.

Der Umlageschlauch kann gegebenenfalls ein oder mehrere zusätzliche Lagen oder Schichten aus unterschiedlichen Elastomeren, thermoplastischen Elastomeren oder Thermoplasten als Zwischenschicht(en) enthalten, die sich zwischen der Innenschicht und der Umlageschicht befinden. Ebenso können neben der Umlageschicht gegebenenfalls noch eine oder mehrere eingebettete Festigkeitsträgerlagen zwischen der Innenschicht und der Umlageschicht vorhanden sein.

Das erfindungsgemäße Verfahren zur Herstellung des mit FKM beschichteten Umlageschlauchs umfasst die Anordnung des Festigkeitsträgers über der Innenschicht, bevorzugt unmittelbar auf der Innenschicht, um die Umlageschicht zu bilden. Der Festigkeitsträger kann in den üblichen Formen aufgebracht werden, z.B. durch Flechten, Stricken oder Cordisieren. Der Festigkeitsträger kann in einer oder mehreren Lagen aufgebracht werden. Der Festigkeitsträger kann als Mischgeflecht aufgebracht werden. Der Festigkeitsträger kann in der Umlageschicht als Geflecht, Gestrick, Gewirke, Gewebe oder dergleichen vorliegen.

Der Festigkeitsträger kann in einer Fadenform, insbesondere als Monofile, auch als Monofilamente bezeichnet, Stapelfaser, Filament, Garn oder Zwirn, vorliegen, bevorzugt in Form von Filamentfasern oder Stapelfasern.

In einer bevorzugten Ausführungsform ist der Festigkeitsträger aus meta-Aramid oder PPS als Filament- oder Stapelfaser, vorzugsweise Stapelfaser.

Das erfindungsgemäße Verfahren umfasst ferner das Aufbringen der wässrigen FKM-Dispersion auf den Festigkeitsträger und das anschließende Trocknen der aufgebrachten Dispersion. Hierfür sind zwei Varianten denkbar. Bei der ersten Variante erfolgt das Aufbringen der wässrigen FKM-Dispersion auf den Festigkeitsträger und das anschließende Trocknen, bevor der Festigkeitsträger über der Innenschicht angeordnet wird. Bei dieser Variante wird der Festigkeitsträger, der mit der getrockneten FKM-Dispersion beschichtet ist, über der Innenschicht angeordnet. Nach der Trocknung kann der beschichtete Festigkeitsträger mehrere Wochen so gelagert werden. Bei der zweiten Variante wird der Festigkeitsträger wie üblich über der Innenschicht angeordnet und anschließend wird die wässrige FKM-Dispersion auf den Festigkeitsträger, der über der Innenschicht angeordnet ist, aufgebracht. Die zweite Variante ist bevorzugt, da der Prozessschritt "Beschichten des Festigkeitsträgers" entfällt.

Die Aufbringung der wässrigen FKM-Dispersion auf den Festigkeitsträger kann auf übliche Weise erfolgen, z.B. durch Aufsprühen, Aufstreichen oder Tauchen, wobei Tauchen bevorzugt ist. Durch die Trocknung wird das Wasser aus der Dispersion im Wesentlichen entfernt. Dies kann z.B. bei Raumtemperatur oder unter Erwärmen durchgeführt werden.

Das erfindungsgemäße Verfahren umfasst ferner das Vulkanisieren bzw. Vernetzen der getrockneten FKM-Dispersion auf dem Festigkeitsträger, der über der Innenschicht angeordnet ist. Die Vulkanisation kann bei üblichen Temperaturen ausgeführt werden, z.B. im Bereich von 120 bis 240°C, bevorzugt 130 bis 190°C. Die Vulkanisation wird mit den für Schläuche üblichen Verfahren wie Dampf- oder Heißluftvulkanisation etc. durchgeführt. Die Vulkanisation kann sowohl kontinuierlich als auch diskontinuierlich erfolgen.

Auf diese Weise wird die vernetzte FKM-Beschichtung auf dem Festigkeitsträger gebildet. Diese Beschichtung wird auch als Umlageschutz oder Versiegelung bezeichnet. Die gebildete FKM-Beschichtung bildet vollständig die Außenschicht des Umlageschlauchs. In Abhängigkeit von der Geflechtskonstruktion dringt das FKM-Coating teilweise oder auch vollständig in die Zwischenräume der Umlageschicht bzw. des Festigkeitsträgers (zwischen den Fasern) ein.

Die Dicke der FKM-Beschichtung kann bei einmaligem Aufbringen z.B. im Bereich von 4 bis 40 µm, bevorzugt von 10 bis 20 µm, liegen. Die Schichtdicke bezieht sich dabei auf die Schichthöhe über dem Festigkeitsträger. Die Dicke der Beschichtung kann durch wiederholtes Aufbringen der wässrigen FKM-Dispersion erhöht werden.

Die auf dem Festigkeitsträger aufgebrachte FKM-Dispersion zeigt im unvernetzten Zustand (d.h. vor der Vulkanisation) eine ausreichend lange Topfzeit, was eine lange Lagerzeit ermöglicht; eine niedrige Mindestfilmbildungstemperatur; und eine niedrige Viskosität, was eine gute Durchdringung des Festigkeitsträgers ermöglicht. Dadurch können die Fasern des Festigkeitsträgers verklebt werden, was das Ausfransen, z.B. beim Schneiden oder Stanzen, verhindert. Im vernetzten Zustand zeigt die FKM-Beschichtung eine hohe Flexibilität, eine geringe Härte und keine Konfektionsklebrigkeit.

In einer Ausführungsform kann auf den Festigkeitsträger ein Haftvermittler aufgebracht werden, bevor die FKM enthaltende Beschichtungszusammensetzung auf den Festigkeitsträger aufgebracht wird. Dadurch kann die Trennfestigkeit verbessert werden. Es können übliche Haftvermittler eingesetzt werden. Beispiele für Haftvermittler sind monomere oder oligomere Aminosilane, insbesondere wässrige monomere oder oligomere Aminosilanole.

Der erfindungsgemäße Umlageschlauch kann in gerader oder auch in geformter Ausführung, z.B. als Schlauchkrümmer, verwendet werden.

Der erfindungsgemäße Umlageschlauch eignet sich für Schläuche im Hoch- und Höchsttemperaturbereich, z. B. Gasschläuche, Abgasrückführschläuche (AGR/eAGR), Schläuche für Dieselpartikelfilter (DPF), Schläuche für Benzinpartikelfilter (GPF), Turboladersteuerschläuche, Öl-, Kühlmittel-, Wasserschläuche, Heat-Transferschläuche, z.B. für e-mobility; Schläuche, die aggressiven Medien ausgesetzt sind, z. B. Schläuche für die chemische Industrie. Der FKM-Latex kann bei Kraftstoffschläuchen auch zur Verringerung der Kraftstoffpermeation beitragen.

Der FKM-beschichtete Umlageschlauch ist bevorzugt ein Gasschlauch, ein Abgasrückführschlauch (AGR/eAGR), ein Schlauch für Dieselpartikelfilter, ein Schlauch für Benzinpartikelfilter, ein Kühlwasserschlauch, ein Kühlmittelschlauch, insbesondere ein Kühlmittelschlauch für Abgasturbolader, ein Turboladersteuerschlauch, ein Heat-Transferschlauch, ein Schmierölschlauch oder ein Ölschlauch.

Die Erfindung betrifft auch einen mit FKM beschichteten Umlageschlauch, der nach dem vorstehend beschriebenen erfindungsgemäßen Verfahren erhältlich ist.

Der erfindungsgemäße Umlageschlauch eignet sich bei Verwendung einer temperaturstabilen Innenschicht und eines temperaturstabilen Festigkeitsträgers als dauertemperaturbeständiger Schlauch für hohe Betriebstemperaturen, wobei als Innenschicht insbesondere eine FKM-Innenschicht eingesetzt wird. Der erfindungsgemäße Umlageschlauch weist vorzugsweise eine Hochtemperaturbeständigkeit von etwa 230°C für 1000 h (T₁₀₀₀ₕ = 230°C) und/oder bis maximal 250°C für 96 h (T₉₆ₕ = 250°C) auf.

Die Erfindung wird nun anhand von Ausführungsbeispielen unter Bezugnahme auf eine schematische Zeichnung erläutert.

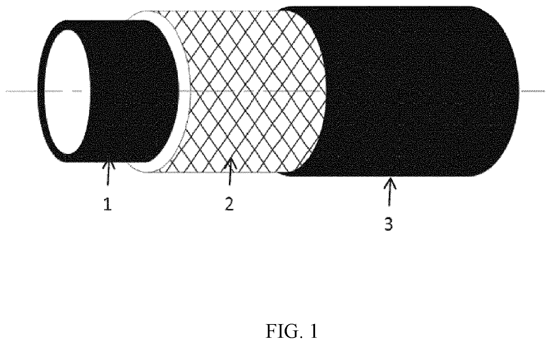

Die Figur zeigt schematisch einen erfindungsgemäßen Umlageschlauch, der aus einer Innenschicht 1 und einer Umlageschicht 2 aufgebaut ist, wobei die Umlageschicht mit einer FKM-Beschichtung 3 versehen ist, die auf einer wässrigen FKM-Dispersion basiert.

Die "Rezeptur trocken" eines FKM-Coatings wird in Anlehnung an Gummirezepturen in parts per hundred rubber (phr) angegeben werden.

Eine beispielhafte "FKM-Rezeptur trocken" kann wie folgt aussehen:

| Funktion | Material | Konzentration trocken |
|---|---|---|
| | | [phr] |
| Bindemittel | FKM | 100 |
| Vernetzer | Di- oder Triaminosilanol | 1-10 |
| Säureakzeptor | ZnO | 5-15 |
| Farbpigment | Russ | 1-10 |
| Additive | Emulgatoren Entschäumer Dispersionshilfsmittel | 1-10 |

Um die Herstellung des FKM-Coatings zu vereinfachen, sollten der Säureakzeptor und die Farbpigmente bzw. Farbstoffe als wässrige Dispersion zugegeben werden. Es ist jedoch auch ohne weiteres möglich, die Ausgangstoffe mit geeigneten Dispersionshilfsmitteln und Emulgatoren in wässrige Suspensionen zu überführen und anschließend dem FKM-Latex zuzufügen.

Das FKM-Coating kann mit destilliertem Wasser beliebig verdünnt werden.

Die FKM-Beschichtung kann mit den üblichen Verfahren wie Sprühen, Tauchen, Rakeln etc. aufgetragen werden. Anschließend wird bei RT oder aber auch bei erhöhter Temperatur getrocknet. Die Vulkanisation der Schläuche kann kontinuierlich oder diskontinuierlich erfolgen.

Exemplarisch sind einige mögliche Ausführungsbeispiele aufgeführt. Je nach Anwendungsfall sind weitere Ausführungsvarianten möglich. Zur Verdeutlichung der grundsätzlichen Zusammenhänge sollten die Ausführungsbeispiele 1-11 ausreichen.

Die Vulkanisation der FKM-Beschichtung kann z.B. von 130-170°C durchgeführt werden.

### Ausführungsbeispiele 1-5

| | |
|---|---|
| Innenschicht 1: | FKM Gummimischung |
| Festigkeitsträger 2: | m-Ar als Stapelfaser mit 5-%er oligomerer Diaminosilanol Lösung, wässrig (als optionaler Haftvermittler) |
| FKM-Beschichtung 3: | FKM-Dispersion, wässrig, 20% FKM Feststoff, 5 phr Vernetzer |

| Ausführungsbeispiel | Haftvermittler | Vernetzer | Trennwiderstand [%] |
|---|---|---|---|
| 1 | - | - | 100 |
| 2 | - | HMDC | 118 |
| 3 | vorhanden | HMDC | 146 |
| 4 | - | Oligomeres Triaminosilanol | 167 |
| 5 | vorhanden | Oligomeres Triaminosilanol | 254 |

Die Ausführungsbeispiele zeigen Folgendes:
- Der Trennwiderstand ist mit einer FKM-Dispersion höher als ohne Beschichtung.
- Die Verwendung von Aminosilanolen anstelle des für FKM-Kautschuke typischen Aminvernetzers Hexamethylendiamincarbamat (HMDA) als Vernetzungsmittel erhöht die Haftung.
- Durch eine Vorbehandlung der Festigkeitsträger mit einer wässrigen Aminosilanol haltigen, wässrigen Lösung wird die Haftung ebenfalls erhöht.

### Ausführungsbeispiele 6-11

| | |
|---|---|
| Innenschicht 1: | FKM |
| Festigkeitsträger 2: | m-Ar als Stapelfaser |
| FKM-Beschichtung 3: | FKM-Dispersion, 15% FKM Feststoff, Vernetzer: oligomeres Diaminosilanol |

| Ausführungsbeispiel | FKM -Coating 15% FKM | |
|---|---|---|
| | Diaminosilanol [phr] | Trennwiderstand [%] |
| 6 | Ohne FKM-Coating | 100 |
| 7 | 1 | 102 |
| 8 | 2,5 | 147 |
| 9 | 5 | 155 |
| 10 | 7,5 | 162 |
| 11 | 10 | 169 |

Die Ausführungsbeispiele 6-11 zeigen Folgendes:
- Die Trennwiderstände verbessern sich mit zunehmender Diaminosilanol-Konzentration.
- Für eine merkliche Erhöhung der Trennwiderstände sollte die Diaminokonzentration größer 1 phr gewählt werden.

Der Ausführungsbeispiele 2-11 zeigen eine hohe Dauerhochtemperaturbeständigkeit, z. B. über 230°C, z.B. über 230°C für 1000h.

### Bezugszeichenliste

### (Teil der Beschreibung)

1 Innenschicht
2 Umlageschicht / Festigkeitsträger
3 FKM-Beschichtung

## Patentansprüche

1. Verfahren zur Herstellung eines mit FKM beschichteten Umlageschlauchs, bei dem
a) ein Festigkeitsträger über einer Innenschicht (1) angeordnet wird, um eine Umlageschicht (2) zu bilden,
b) eine Beschichtungszusammensetzung, die Fluorkautschuk (FKM) enthält, auf den Festigkeitsträger aufgebracht und getrocknet wird, bevor oder nachdem der Festigkeitsträger über der Innenschicht angeordnet wird, und
c) die getrocknete Beschichtungszusammensetzung auf dem Festigkeitsträger, der über der Innenschicht angeordnet ist, vulkanisiert wird, um die FKM-Beschichtung (3) zu bilden,
**dadurch gekennzeichnet, dass** die FKM enthaltende Beschichtungszusammensetzung eine wässrige FKM-Dispersion ist, die mindestens ein Vernetzungsmittel ausgewählt aus Polyamin, monomerem Aminosilan und oligomerem Aminosilan enthält.

2. Verfahren nach Anspruch 1, **dadurch gekennzeichnet, dass** die wässrige FKM-Dispersion monomeres Aminosilan und/oder oligomeres Aminosilan enthält.

3. Verfahren nach Anspruch 1 oder Anspruch 2, **dadurch gekennzeichnet, dass** das monomere Aminosilan eine, zwei oder drei Aminogruppen aufweist und/oder das oligomere Aminosilan aus monomerem Aminosilan mit einer, zwei oder drei Aminogruppen gebildet wird.

4. Verfahren nach irgendeinem der Ansprüche 1 bis 3, **dadurch gekennzeichnet, dass** das Vernetzungsmittel oligomeres Aminosilan ist, bevorzugt vollständig hydrolysiertes oligomeres Aminosilan.

5. Verfahren nach irgendeinem der Ansprüche 1 bis 4, **dadurch gekennzeichnet, dass** die wässrige FKM-Dispersion mindestens einen Säureakzeptor umfasst, der bevorzugt aus einem Metalloxid, insbesondere aus MgO und/oder ZnO, ausgewählt ist.

6. Verfahren nach irgendeinem der Ansprüche 1 bis 5, **dadurch gekennzeichnet, dass** die wässrige FKM-Dispersion ferner mindestens ein Additiv ausgewählt aus Stabilisatoren, wie nichtionischem, aromatischem Polyglycolether, Tensiden, wie anionischem Tensid, und Pigmenten, wie Ruß, umfasst.

7. Verfahren nach irgendeinem der Ansprüche 1 bis 6, **dadurch gekennzeichnet, dass** die wässrige FKM-Dispersion 1 bis 67 Gew.-%, bevorzugt 1 bis 50 Gew.-%, bevorzugter 2 bis 25 Gew.-%, FKM, bevorzugter bezogen auf das Gesamtgewicht der Dispersion, enthält.

8. Verfahren nach irgendeinem der Ansprüche 1 bis 7, **dadurch gekennzeichnet, dass** die Gesamtmenge an Polyamin, monomerem und/oder oligomerem Aminosilan in der wässrigen FKM-Dispersion im Bereich von 1 bis 20 phr, bevorzugt 2,5 bis 10 phr liegt.

9. Verfahren nach irgendeinem der Ansprüche 1 bis 8, **dadurch gekennzeichnet, dass** der Festigkeitsträger 2 aus Aramid (Ar), insbesondere meta-Aramid (m-Ar), Polyphenylensulfid (PPS) oder anorganischen Fasern, gebildet ist, wobei der Festigkeitsträger bevorzugt aus m-Ar gebildet ist, und/oder die Innenschicht 1 aus FKM umfasst oder daraus gebildet ist.

10. Verfahren nach irgendeinem der Ansprüche 1 bis 9, **dadurch gekennzeichnet, dass** der Festigkeitsträger aus meta-Aramid oder PPS als Filament- oder Stapelfaser, vorzugsweise Stapelfaser, ist.

11. Verfahren nach irgendeinem der Ansprüche 1 bis 10, **dadurch gekennzeichnet, dass** der FKM-beschichtete Umlageschlauch ein Gasschlauch, ein Abgasrückführschlauch (AGR/eAGR), ein Schlauch für Dieselpartikelfilter, ein Schlauch für Benzinpartikelfilter, ein Kühlwasserschlauch, ein Kühlmittelschlauch, ein Turboladersteuerschlauch, ein Heat-Transferschlauch, ein Schmierölschlauch oder ein Ölschlauch ist.

12. Verfahren nach irgendeinem der Ansprüche 1 bis 11, **dadurch gekennzeichnet, dass** auf den Festigkeitsträger ein Haftvermittler aufgebracht wird, bevor die FKM enthaltende Beschichtungszusammensetzung auf den Festigkeitsträger aufgebracht wird.

13. Mit FKM beschichteter Umlageschlauch, erhältlich nach irgendeinem Verfahren der Ansprüche 1 bis 12.

14. Verwendung eines mit FKM beschichteten Umlageschlauchs nach Anspruch 13 als hochtemperaturbeständigen Schlauch.

## Claims

1. Process for producing an FKM-coated mantle hose, wherein
a) a strength member is arranged over an inner layer (1) to form a mantle layer (2),
b) a coating composition containing fluororubber (FKM) is applied to the strength member and dried before or after the strength member is arranged over the inner layer and
c) the dried coating composition is vulcanized on the strength member arranged over the inner layer to form the FKM coating (3),
**characterized in that** the FKM-containing coating composition is an aqueous FKM dispersion containing at least one crosslinking agent selected from polyamine, monomeric aminosilane and oligomeric aminosilane.

2. Process according to Claim 1, **characterized in that** the aqueous FKM dispersion contains monomeric aminosilane and/or oligomeric aminosilane.

3. Process according to Claim 1 or Claim 2, **characterized in that** the monomeric aminosilane comprises one, two or three amino groups and/or the oligomeric aminosilane is formed from monomeric amino silane having one, two or three amino groups.

4. Process according to any of Claims 1 to 3, **characterized in that** the crosslinking agent is oligomeric aminosilane, preferably fully hydrolysed oligomeric aminosilane.

5. Process according to any of Claims 1 to 4, **characterized in that** the aqueous FKM dispersion comprises at least one acid acceptor preferably selected from a metal oxide, in particular from MgO and/or ZnO.

6. Process according to any of Claims 1 to 5, **characterized in that** the aqueous FKM dispersion further comprises at least one additive selected from stabilizers, such as nonionic aromatic polyglycol ether, surfactants, such as anionic surfactant, and pigments, such as carbon black.

7. Process according to any of Claims 1 to 6, **characterized in that** the aqueous FKM dispersion contains 1% to 67% by weight, preferably 1% to 50% by weight, more preferably 2% to 25% by weight, of FKM, more preferably based on the total weight of the dispersion.

8. Process according to any of Claims 1 to 7, **characterized in that** the total amount of polyamine, monomeric and/or oligomeric amino silane in the aqueous FKM dispersion is in the range from 1 to 20 phr, preferably 2.5 to 10 phr.

9. Process according to any of Claims 1 to 8, **characterized in that** the strength member 2 is formed from aramid (Ar), in particular meta-aramid (m-Ar), polyphenylene sulfide (PPS) or inorganic fibres, wherein the strength member is preferably formed from m-Ar and/or the inner layer 1 comprises FKM or is formed therefrom.

10. Process according to any of Claims 1 to 9, **characterized in that** the strength member is made of meta-aramid or PPS as filament or staple fibre, preferably staple fibre.

11. Process according to any of Claims 1 to 10, **characterized in that** the FKM-coated mantle hose is a gas hose, an exhaust gas recirculation hose (EGR/eEGR), a hose for diesel particulate filters, a hose for gasoline particulate filters, a cooling water hose, a cooling media hose, a turbocharger actuator hose, a heat transfer hose, a lubricating oil hose or an oil hose.

12. Process according to any of Claims 1 to 11, **characterized in that** an adhesion promoter is applied to the strength member before the FKM-containing coating composition is applied to the strength member.

13. FKM-coated mantle hose obtainable by a process according to any of Claims 1 to 12.

14. Use of an FKM-coated mantle hose according to Claim 13 as a high temperature-resistant hose.

## Revendications

1. Procédé pour la fabrication d'un tuyau à enveloppe revêtu de FKM, dans lequel
a) un renfort est disposé sur une couche interne (1), afin de constituer une couche d'enveloppe (2),
b) une composition de revêtement, qui contient du caoutchouc fluoré (FKM), est appliquée sur le renfort et séchée, avant ou après que le renfort soit disposé sur la couche interne, et
c) la composition de revêtement séchée est vulcanisée sur le renfort, qui est disposé sur la couche interne, afin de constituer le revêtement FKM (3),
**caractérisé en ce que** la composition de revêtement contenant du FKM est une dispersion aqueuse de FKM qui contient au moins un agent de réticulation choisi parmi une polyamine, un aminosilane monomère et un aminosilane oligomère.

2. Procédé selon la revendication 1, **caractérisé en ce que** la dispersion aqueuse de FKM contient un aminosilane monomère et/ou un aminosilane oligomère.

3. Procédé selon la revendication 1 ou la revendication 2, **caractérisé en ce que** l'aminosilane monomère comporte un, deux ou trois groupes amino et/ou l'aminosilane oligomère est formé à partir d'aminosilane monomère comportant un, deux ou trois groupes amino.

4. Procédé selon l'une quelconque des revendications 1 à 3, **caractérisé en ce que** l'agent de réticulation est un aminosilane oligomère, de préférence un aminosilane oligomère totalement hydrolysé.

5. Procédé selon l'une quelconque des revendications 1 à 4, **caractérisé en ce que** la dispersion aqueuse de FKM comprend au moins un accepteur d'acide, qui est choisi de préférence parmi un oxyde métallique, en particulier parmi MgO et/ou ZnO.

6. Procédé selon l'une quelconque des revendications 1 à 5, **caractérisé en ce que** la dispersion aqueuse de FKM comprend en outre au moins un additif choisi parmi des stabilisants, tels qu'un polyglycoléther aromatique non ionique, des tensioactifs, tels qu'un tensioactif anionique, et des pigments, tels que le noir de carbone.

7. Procédé selon l'une quelconque des revendications 1 à 6, **caractérisé en ce que** la dispersion aqueuse de FKM contient 1 à 67 % en poids, de préférence 1 à 50 % en poids, de façon plus particulièrement préférée 2 à 25 % en poids, de FKM, de façon plus particulièrement préférée par rapport au poids total de la dispersion.

8. Procédé selon l'une quelconque des revendications 1 à 7, **caractérisé en ce que** la quantité totale de polyamine, aminosilane monomère et/ou oligomère dans la dispersion aqueuse de FKM se situe dans la plage de 1 à 20 phr, de préférence 2,5 à 10 phr.

9. Procédé selon l'une quelconque des revendications 1 à 8, **caractérisé en ce que** le renfort (2) est constitué d'aramide (Ar), en particulier de méta-aramide (m-Ar), poly(sulfure de phénylène) (PPS) ou fibres inorganiques, le renfort étant constitué de préférence de m-Ar, et/ou la couche interne (1) comprend du FKM ou est constituée de celui-ci.

10. Procédé selon l'une quelconque des revendications 1 à 9, **caractérisé en ce que** le renfort constitué de méta-aramide ou PPS est sous forme de fibres continues ou discontinues, de préférence fibres discontinues.

11. Procédé selon l'une quelconque des revendications 1 à 10, **caractérisé en ce que** le tuyau à enveloppe revêtu de FKM est un flexible pour gaz, un tuyau de recyclage des gaz d'échappement (AGR/eAGR), un tuyau pour filtre à particules diesel, un tuyau pour filtre à particules essence, un tuyau d'eau de refroidissement, un tuyau de liquide de refroidissement, un tuyau de commande de turbocompresseur, un tuyau de transfert de chaleur, un tuyau d'huile de graissage ou un tuyau d'huile.

12. Procédé selon l'une quelconque des revendications 1 à 11, **caractérisé en ce qu'**un agent d'adhérence est appliqué sur le renfort, avant que la composition de revêtement contenant du FKM soit appliquée sur le renfort.

13. Tuyau à enveloppe revêtu de FKM, pouvant être obtenu selon un procédé quelconque des revendications 1 à 12.

14. Utilisation d'un tuyau à enveloppe revêtu de FKM selon la revendication 13, en tant que tuyau résistant aux températures élevées.
